# EUROPEAN PATENT SPECIFICATION

(11) **EP 3 573 470 B1**
(45) Date of publication and mention of the grant of the patent: **18.08.2021**
(21) Application number: 18704718.8
(22) Date of filing: 26.01.2018
(51) Int. Cl.: A23G 9/28

(54) **SHAKE PRODUCT BLENDING AND DISPENSING PROCESS**
VERMISCHUNGSVERFAHREN FÜR SHAKE-PRODUKT
PROCÉDÉ DE MÉLANGE DE PRODUITS À AGITER

(30) Priority: 27.01.2017 US 201762451279 P
(43) Date of publication of application: 04.12.2019
(73) Proprietor: Taylor Commercial Foodservice, LLC, Rockton, IL 61072 (US)
(72) Inventor: VANDE VOORT, Parker R., Rockton Illinois 61072 (US); RYAN, Mark A., Rockton Illinois 61072 (US); GRULKE, Marc R., Rockton Illinois 61072 (US); MINARD, James J., Rockton Illinois 61072 (US)
(74) Representative: Grünecker Patent- und Rechtsanwälte PartG mbB
(86) International application number: PCT/US2018/015436
(87) International publication number: WO 2018/140716

(56) References cited:
- EP-A1- 1 927 290
- EP-A1- 3 017 702
- EP-A1- 3 245 877
- WO-A1-88/09766
- WO-A1-2004/034805
- GB-A- 1 423 123
- NL-A- 7 214 988
- US-A- 3 460 717
- US-A1- 2016 324 185

## Description

### BACKGROUND

Embodiments of this disclosure relate generally to an apparatus for dispensing shakes or soft serve products, and more particularly, to improvements in the process of dispensing shakes, ice cream or soft serve products from the apparatus.

Frozen confections are widely used in the food industry and have a broad customer appeal. Although ice creams are the most widely known product dispensed in soft serve form, an expanding market based on alternative frozen confections, like yogurts, also exists. A frozen confection is dispensed as a blended product from a refrigerated or non- refrigerated mix and one or more syrups output into an edible cone or other suitable container. The frozen confection is generally intended for immediate consumption.

Typically, a frozen confection product dispensing machine houses a first portion for storage of syrups, while a second portion includes at least one large refrigerated hopper for holding liquid dairy mix. In order to produce the soft-serve product, the liquid dairy mix is frozen in an agitated barrel along with additional air then blended together with flavored concentrate syrup in a mixer. The rate at which the syrup is provided to the mixer is generally constant, however, the rate at which the frozen ice cream is provided to the mixer is non-constant, resulting in an unevenly mixed product being dispensed. In addition, during the beginning of a dispense cycle, a portion of the shake product may splatter. Together, this splatter and the carryover of one or more syrup flavors previously provided to the mixer may result in a dispensed product having an undesirable appearance and product quality. WO 2004/034805 A1 discloses a pump which transfers syrup through a supply line and through a valve assembly for mixing with ice cream in a mixing chamber to form a frozen dessert or milkshake. NL 7214 988 A relates to a machine for the production of mixed ice-cream beverages. From EP 3 017 702 A1, a machine for making variegated ice cream products or ice cream shake products is known. GB 1 423 123 A discloses a machine for the production of the ice cream shakes. EP 1 927 290 A1 concerns a machine for making two different types of product consisting respectively of ice creams and of shakes. From US 2016/324185 A1, a frozen confection dispensing apparatus, which includes a freezer section and a dispensing section connected to the freezer section, is known. WO 88/09766 A1 relates to a flavor dispensing device that is usable on machines for dispensing frozen foods, such as ice cream. US 3 460 717 A discloses a mixing assembly for a dispenser of semi-fluid substances such as slush and soft ice cream, which includes a non-rotating mixing means carried by a nozzle and located at the discharge outlet of such nozzle.

### SUMMARY

According to a first embodiment, an apparatus for dispensing a frozen confection includes a mixing chamber within which an ice cream and at least one flavored concentrate are mixed. A valve assembly is operable to control a flow of the mixture of ice cream into the mixing chamber. A pump provides said at least one flavored concentrate to the mixing chamber. A dispensing nozzle is arranged in fluid communication with the mixing chamber. The dispensing nozzle has a flow channel through which a mixture of the ice cream and at least one flavored concentrate is dispensed. The flow channel has a first diameter adjacent an inlet end of the dispensing nozzle and a second diameter adjacent an outlet end of the dispensing nozzle. The second diameter is greater than the first diameter.

In addition to one or more of the features described above, or as an alternative, in further embodiments said dispensing nozzle has an extended length such that said flow of said mixture of said ice cream and said at least one flavored concentrate through said flow channel is laminar.

In addition to one or more of the features described above, or as an alternative, in further embodiments said pump is operable to vary a rate at which said flavored concentrate is provided to said mixing chamber.

In addition to one or more of the features described above, or as an alternative, in further embodiments said pump is operable to vary said rate at which said flavored concentrate is provided to said mixing chamber to match a rate at which said mixture of said ice cream mix and said at least one flavored concentrate is dispensed into an adjacent container.

In addition to one or more of the features described above, or as an alternative, in further embodiments said apparatus further comprises a source of said flavored concentrate fluidly coupled to said mixing chamber via a conduit, and said pump is operable in a reverse direction to reduce pressure within said conduit.

According to another embodiment, a method of dispensing a frozen confection from an apparatus includes supplying ice cream to a mixing cavity via a valve assembly, supplying a flavored concentrate to said mixing cavity using a pump, and mixing said ice cream and said flavored concentrate within said mixing cavity. The mixture of ice cream and flavored concentrate is dispensed into a container via a dispensing nozzle. The pump is operable to vary a rate at which said flavored concentrate is supplied to said mixing cavity to enhance an appearance of said mixture of said ice cream and said flavored concentrate within said container.

In addition to one or more of the features described above, or as an alternative, in further embodiments said pump is operable to vary said rate at which said flavored concentrate is provided to said mixing chamber to match a rate at which said mixture of said ice cream and said flavored concentrate is dispensed into said container.

In addition to one or more of the features described above, or as an alternative, in further embodiments comprising relieving a pressure within a conduit for supplying said flavored concentrate to said mixing cavity after said mixture of said ice cream and said flavored concentrate is dispensed into said container.

In addition to one or more of the features described above, or as an alternative, in further embodiments said pressure includes operating said pump in a reverse direction after said mixture of said ice cream and said flavored concentrate is dispensed into said container.

In addition to one or more of the features described above, or as an alternative, in further embodiments comprising removing flavored concentrate from one or more surfaces of at least one of said mixing chamber and said dispensing nozzle after said mixture of said ice cream and said flavored concentrate is dispensed into said container.

In addition to one or more of the features described above, or as an alternative, in further embodiments removing flavored concentrate from one or more surfaces of at least one of said mixing chamber and said dispensing nozzle further comprises opening and closing said valve assembly after said dispensing.

In addition to one or more of the features described above, or as an alternative, in further embodiments a flow channel of said dispensing nozzle has a first diameter adjacent an inlet end of said dispensing nozzle and has a second diameter adjacent an outlet end of said dispensing nozzle, said second diameter being greater than said first diameter.

In addition to one or more of the features described above, or as an alternative, in further embodiments a flow channel of said dispensing nozzle has a first diameter adjacent an inlet end of said dispensing nozzle and has a second diameter adjacent an outlet end of said dispensing nozzle, said first diameter being greater than or equal to said second diameter.

According to another embodiment, a method of dispensing a frozen confection from an apparatus includes supplying ice cream to a mixing cavity via a valve assembly, supplying a flavored concentrate to said mixing cavity using a pump, and mixing said ice cream and said flavored concentrate within said mixing cavity. The mixture of ice cream and flavored concentrate is dispensed into a container via a dispensing nozzle. The pump is operated in reverse to reduce pressure within a conduit providing said flavored concentrate to said mixing cavity.

In addition to one or more of the features described above, or as an alternative, in further embodiments comprising removing flavored concentrate from one or more surfaces of at least one of said mixing chamber and said dispensing nozzle further comprises opening and closing said valve assembly after said dispensing.

### BRIEF DESCRIPTION OF THE DRAWINGS

The subject matter, which is regarded as the present disclosure, is particularly pointed out and distinctly claimed in the claims at the conclusion of the specification. The foregoing and other features, and advantages of the present disclosure are apparent from the following detailed description taken in conjunction with the accompanying drawings in which:
FIG. 1 is a schematic diagram of an example of an apparatus for dispensing frozen confection;
FIG. 2 is a schematic diagram of another example of an apparatus for dispensing frozen confection;
FIG. 3 is a schematic diagram of an example of a control system of the apparatus of FIGS. 1 and 2; and
FIG. 4 is a cross-sectional view of a dispensing nozzle of the apparatus according to an embodiment.
The detailed description explains embodiments of the present disclosure, together with advantages and features, by way of example with reference to the drawings.

### DETAILED DESCRIPTION

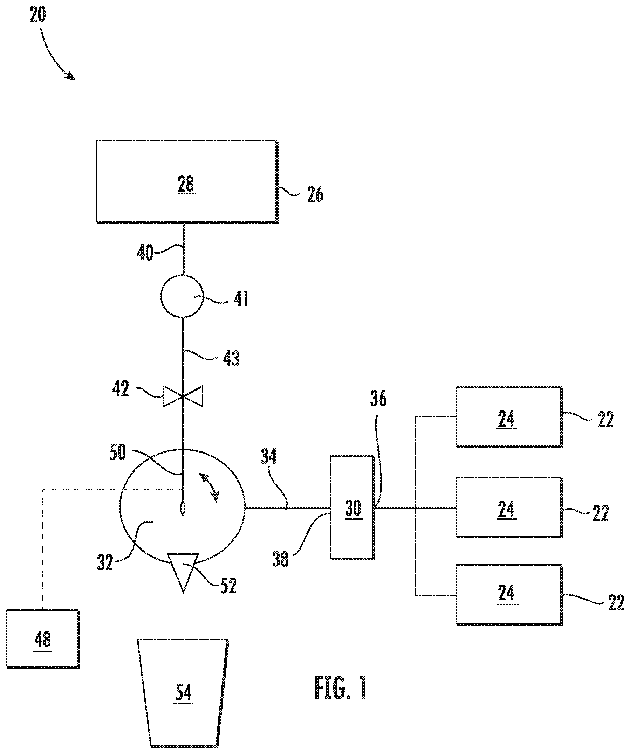

Referring now to FIG. 1, a schematic diagram of an apparatus 20 for dispensing one or more frozen confections is illustrated. As used herein, the term frozen confection is intended to include confections of varying consistencies including, but not limited to shakes, soft serve, and ice cream. As shown, the apparatus 20 includes a concentrate container 22 for storing at least one flavored concentrate or syrup 24 and an ice cream source 26 which contains a supply of liquid ice cream mix 28. The liquid ice cream mix 28 within the ice cream source 26 may, but need not be refrigerated. In embodiments where the apparatus 20 is configured to dispense multiple flavors of frozen confection, such as chocolate, vanilla, and strawberry for example, the ice cream mix 28 functions as a generic base and one or more of a plurality of flavored concentrates 24 is mixed therewith to form each of the plurality of frozen confections dispensable from the apparatus 20. such embodiments, the apparatus 20 may include multiple concentrate containers 22, each containing a flavored concentrate 24 associated with a flavor. Alternatively, each flavored concentrate 24 may be stored within a respective compartment of a concentrate container 22. The flavored concentrate(s) 24 may contain particulates, such as fruit, candy, baked confection, or uncooked dough of a baked confection for example.

A pump 30 is configured to draw a predetermined amount of flavored concentrate 24 from at least one concentrate container 22 into a mixing cavity 32. The flavored concentrate 24 from a respective concentrate container 22 flows along a conduit 34 and into a concentrate inlet 36 of the pump 30. The pump 30 is operable to control the flow rate and amount of flavored concentrate 24 dispensed through a concentrate outlet 38 of the pump 30 and into the mixing cavity 32. In instances where the apparatus 20 includes a plurality of flavored concentrates 24, a single pump 30 may be associated with more than one of the plurality of flavored concentrates 24. Alternatively, each flavored concentrate 24 may include an independent conduit 34 associated with an independent pump 30.

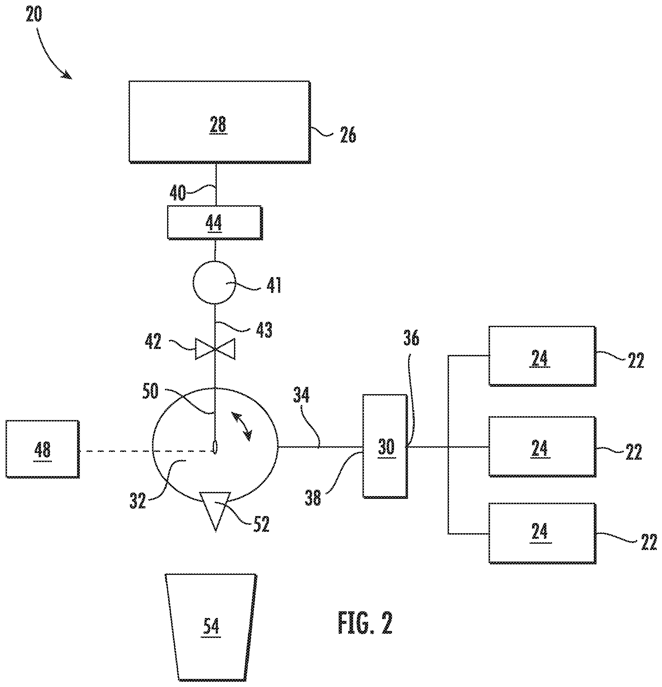

Liquid ice cream mix 28 from the ice cream source 26 is configured to flow along a conduit 40 to a freezing barrel 41, where the liquid ice cream mix 28 is frozen to form an ice cream, such as by reducing the temperature of the mix to below 0 degrees Fahrenheit for example. From the freezing barrel 41, ice cream continues through the conduit 43 towards the mixing cavity 32. In an embodiment, the flow of the frozen ice cream mix 28 (i.e. ice cream) through conduit 40 and conduit 43 may be gravity driven and a valve 42 disposed within the conduit 43 is used to control the flow rate and amount of ice cream (frozen ice cream mix 28) provided to the mixing cavity 32. Alternatively, a pump 44 (FIG. 2) may be operable to control the flow of the liquid ice cream mix 28 from the source 26 into the freezing barrel 41. In such embodiments, the pump 30 associated with the flavored concentrate 24 and the pump 44 associated with the ice cream mix 28 may be the same, or may be different. In an embodiment, at least one of the pump 30 associated with the flavored concentrate 24 and the pump 44 associated with the ice cream is a gear pump or nutating pump; however, it should be understood that other suitable types of pumps are also contemplated herein. Each of the conduits 34, 40 and 43 associated with the flavored concentrate 24 and the ice cream mix 28 are formed from a food safe material, and may be insulated.

The mixing cavity 32 may be insulated to cool or maintain the frozen confection therein at a desired temperature. Within the mixing cavity 32, the flavored concentrate 24 and the frozen ice cream 28 are thoroughly mixed to create a confection having a desired concentration and flavor. A motor 48 may be operably coupled to a spinner 50 to mix the ingredients within the mixing cavity 32. While a spinner 50 is described herein as the prime mechanical actuator for mixing the ice cream 28 and the flavored concentrate 24 within the mixing cavity 32, it should be understood that other mechanical arrangements as known to those of ordinary skill in the art can be similarly employed.

The frozen confection may be output from the mixing cavity 32 via a dispensing nozzle 52 into an adjacent receptacle 54, such as a container for example, for consumption. In an embodiment, the frozen confection within the mixing cavity 32 is configured to free flow therefrom into the container 54. Consequently, the rate at which the frozen confection is output from the mixing cavity 32 is dependent on the operational position of valve 42, which determines the rate at which ice cream is provided to the mixing cavity 32.

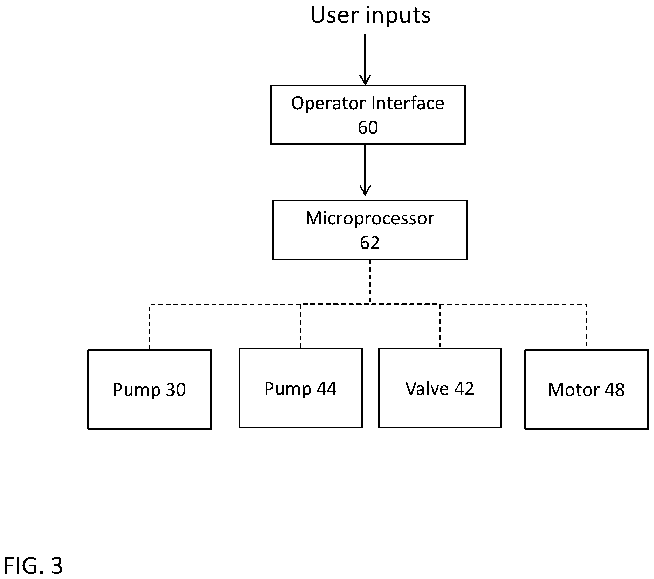

With reference now to FIGS. 1-3, in use, the apparatus 20 is operated by first entering one or more inputs into an operator interface 60. Such inputs typically include a desired flavor and volume to be dispensed. A microprocessor or controller 62 operably coupled to the operator interface 60 then controls internal pumps 30, 44 and valve 42 to allow for appropriate amounts of ice cream and flavored concentrate 24 to be provided to the mixing cavity 32, while energizing the motor 48. Energizing the motor 48 causes the spinner 50 to begin rotating and thus mixing the ice cream 28 and flavored concentrate 24. In an embodiment, the rotation of the spinner 50 is initiated before the valve 42 is opened.

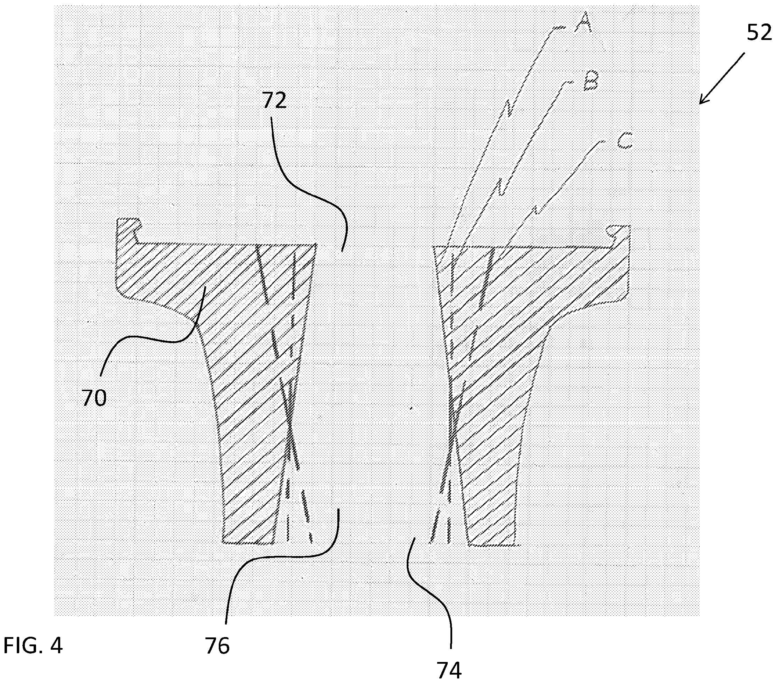

With reference now to FIG. 4, a dispensing nozzle 52 intended to improve the aesthetic appearance of the frozen confection dispensed from the apparatus 20 is illustrated. The dispensing nozzle 52 includes a body 70 having a first inlet end 72 arranged in fluid communication with the interior of the mixing cavity 32 and a second, outlet end 74 arranged generally adjacent the container 54. A channel 76 extends through the body 70 such that the inlet end 72 and the outlet end 74 thereof are arranged in fluid communication. In an embodiment, the distance between the inlet end 72 and the outlet end 74 is sufficient such that the combined frozen confection has a laminar or non-turbulent flow within the channel 76. The diameter of the channel 76 adjacent the outlet end 74 is greater than the diameter of the channel 76 adjacent the inlet end 72, resulting in a negative nozzle angle. As the cross-sectional area of the channel 76 increases along the flow path, the velocity of the frozen confection reduces, thereby reducing the amount of splatter that occurs at the outlet end 74 of the channel 76. The dispensing nozzle 52, however, is sized to maintain a diameter and back pressure instrumental to achieving an ideal blending of the ice cream (frozen ice cream mix 28) and flavored concentrate 24.

Alternatively, or in addition, operation of the pump 30 associated with the flavored concentrate 24 may be controlled to achieve a more aesthetically pleasing appearance of the frozen confection dispensed from the apparatus 20. The pump 30 is configured to vary the rate at which the flavored concentrate 24 is provided to the mixing cavity 32. In an embodiment, the rate at which the flavored concentrate 24 is provided to the mixing cavity 32 by the pump 30 is varied to match the rate at which the frozen confection is output through the dispensing nozzle 52. For example, by measuring the flow rate, or one or more parameters indicative of the flow rate through the dispensing nozzle 52, the operation of the pump 30 may be adjusted in real time to adapt to changes therein. Operation of the pump 30 typically provides the flavored concentrate 24 to the mixing cavity 32 in a series of pulses. However, by varying the operation of the pump 30, the interval or pause between sequential pulses is reduced, thereby lessening the striation that occurs in the dispensed product as a result of this pulsing.

At the end of a dispense cycle, the pump 30 may be operated in reverse to relieve the pressure build up within the conduit 34 that may cause flavored concentrate 24 to leak into the mixing cavity 32. The pump 30 may be operated in this manner for a variable time period. In another embodiment, an additional cycle of opening and closing the valve assembly 42 is performed at the end of the dispense cycle. This additional opening and closing acts to wipe or squeegee residual flavored concentrate 24 from the exposed surfaces of the mixing cavity 32. Through this cleaning function, the amount of carryover flavored concentrate 24 left to contaminate the next frozen confection output from the apparatus 20 is reduced.

While the disclosure has been described in detail in connection with only a limited number of embodiments, it should be readily understood that the disclosure is not limited to such disclosed embodiments. Rather, the invention can be modified to incorporate any number of variations, alterations, substitutions or equivalent arrangements not heretofore described, but which are commensurate with the scope of the disclosure. Additionally, while various embodiments of the disclosure have been described, it is to be understood that aspects of the disclosure may include only some of the described embodiments. Accordingly, the disclosure is not to be seen as limited by the foregoing description, but is only limited by the scope of the appended claims.

## Claims

1. An apparatus (20) for dispensing a frozen confection comprising:
a mixing chamber (32) within which an ice cream (28) and at least one flavored concentrate (24) are mixed,
a valve assembly (42) operable to control a flow of said mixture of said ice cream (28) into said mixing chamber (32);
a pump (30) for providing said at least one flavored concentrate (24) to said mixing chamber (32); and
a dispensing nozzle (52) arranged in fluid communication with said mixing chamber (32), said dispensing nozzle (52) having a flow channel (76) through which a mixture of said ice cream (28) and said at least one flavored concentrate (24) is dispensed, said flow channel (76) having a first diameter adjacent an inlet end (72) of said dispensing nozzle (52) and a second diameter adjacent an outlet end (74) of said dispensing nozzle (52), said second diameter being greater than said first diameter.

2. The apparatus of claim 1, wherein said dispensing nozzle (52) has an extended length such that said flow of said mixture of said ice cream (28) and said at least one flavored concentrate (24) through said flow channel (76) is laminar.

3. The apparatus of any of the preceding claims, wherein said pump (30) is operable to vary a rate at which said flavored concentrate (24) is provided to said mixing chamber (32).

4. The apparatus of any of the preceding claims, wherein said pump (30) is operable to vary said rate at which said flavored concentrate (24) is provided to said mixing chamber (32) to match a rate at which said mixture of said ice cream mix (28) and said at least one flavored concentrate (24) is dispensed into an adjacent container (54).

5. The apparatus of any of the preceding claims, wherein said apparatus further comprises a source (22) of said flavored concentrate (24) fluidly coupled to said mixing chamber (32) via a conduit (34), and said pump (30) is operable in a reverse direction to reduce pressure within said conduit (34).

6. A method of dispensing a frozen confection from an apparatus comprising:
supplying ice cream (28) to a mixing cavity (32) via a valve assembly (42);
supplying a flavored concentrate (24) to said mixing cavity (32) using a pump (30);
mixing said ice cream (28) and said flavored concentrate (24) within said mixing cavity (32); and
dispensing a mixture of said ice cream (28) and said flavored concentrate (24) into a container (54) via a dispensing nozzle (52);
wherein a flow channel (76) of said dispensing nozzle (52) has a first diameter adjacent an inlet end (72) of said dispensing nozzle (52) and has a second diameter adjacent an outlet end (74) of said dispensing nozzle (52), said second diameter being greater than said first diameter.

7. The method of claim 6, wherein said pump (30) is operable to vary a rate at which said flavored concentrate (24) is supplied to said mixing cavity (32) to enhance an appearance of said mixture of said ice cream (28) and said flavored concentrate (24) within said container (54).

8. The method of claim 7, wherein said pump (30) is operable to vary said rate at which said flavored concentrate (24) is provided to said mixing chamber (30) to match a rate at which said mixture of said ice cream (28) and said flavored concentrate (24) is dispensed into said container (54).

9. The method of any of claims 6 to 8, further comprising relieving a pressure within a conduit (34) for supplying said flavored concentrate (24) to said mixing cavity (32) after said mixture of said ice cream (28) and said flavored concentrate (24) is dispensed into said container (54).

10. The method of claim 9, wherein relieving said pressure includes operating said pump (30) in a reverse direction after said mixture of said ice cream (28) and said flavored concentrate (24) is dispensed into said container (54).

11. The method of any of claims 6 to 10, further comprising removing flavored concentrate (24) from one or more surfaces of at least one of said mixing chamber (32) and said dispensing nozzle (52) after said mixture of said ice cream (28) and said flavored concentrate (24) is dispensed into said container (54).

12. The method of claim 11, wherein removing flavored concentrate (24) from one or more surfaces of at least one of said mixing chamber (32) and said dispensing nozzle (52) further comprises opening and closing said valve (42) assembly after said dispensing.

13. The method of claim 6, further comprising:
operating said pump (30) in reverse to reduce pressure within a conduit (34) providing said flavored concentrate (24) to said mixing cavity (32).

14. The method of claim 13, further comprising removing flavored concentrate (24) from one or more surfaces of at least one of said mixing chamber (32) and said dispensing nozzle (52) further comprises opening and closing said valve assembly (42) after said dispensing.

## Patentansprüche

1. Vorrichtung (20) zum Abgeben einer gefrorenen Süßspeise, die umfasst:
eine Mischkammer (32), in der ein Speiseeis (28) und wenigstens ein aromatisiertes Konzentrat (24) gemischt werden,
eine Ventilanordnung (42), die so betrieben werden kann, dass ein Strom des Gemischs des Speiseeises (28) in die Mischkammer (32) hinein gesteuert wird;
eine Pumpe (30) zum Zuführen des wenigstens einen aromatisierten Konzentrats (24) zu der Mischkammer (32); sowie
eine Abgabedüse (52), die in Fluidverbindung mit der Mischkammer (32) angeordnet ist, wobei die Abgabedüse (52) einen Strömungskanal (76) aufweist, über den ein Gemisch aus dem Speiseeis (28) und dem wenigstens einen aromatisierten Konzentrat (24) abgegeben wird, der Strömungskanal (76) einen ersten Durchmesser an ein Einlass-Ende (72) der Abgabedüse (52) angrenzend und einen zweiten Durchmesser an ein Auslass-Ende (74) der Abgabedüse (52) angrenzend hat und der zweite Durchmesser größer ist als der erste Durchmesser.

2. Vorrichtung nach Anspruch 1, wobei sich die Abgabedüse (52) über eine Länge erstreckt, durch die der Strom des Gemischs aus dem Speiseeis (28) und dem wenigstens einen aromatisierten Konzentrat (24) durch den Strömungskanal (76) hindurch laminar ist.

3. Vorrichtung nach einem der vorangehenden Ansprüche, wobei die Pumpe (30) so betrieben werden kann, dass eine Menge geändert wird, in der das aromatisierte Konzentrat (24) der Mischkammer (32) zugeführt wird.

4. Vorrichtung nach einem der vorangehenden Ansprüche, wobei die Pumpe (30) so betrieben werden kann, dass die Menge, in der das aromatisierte Konzentrat (24) der Mischkammer (32) zugeführt wird, so geändert wird, dass sie einer Menge entspricht, in der das Gemisch aus dem Speiseeis (28) und dem wenigstens einen automatisierten Konzentrat (24) in einen angrenzenden Behälter (54) abgegeben wird.

5. Vorrichtung nach einem der vorangehenden Ansprüche, wobei die Vorrichtung des Weiteren eine Quelle (22) des aromatisierten Konzentrats (24) umfasst, die über eine Leitung (34) in Fluidverbindung mit der Mischkammer (32) ist, und die Pumpe (30) in umgekehrter Richtung so betrieben werden kann, dass der Druck in der Leitung (34) verringert wird.

6. Verfahren zum Abgeben einer gefrorenen Süßspeise aus einer Vorrichtung, die umfasst:
Zuleiten von Speiseeis (28) zu einem Misch-Hohlraum (32) über eine Ventilanordnung (42);
Zuleiten eines aromatisierten Konzentrats (24) zu dem Misch-Hohlraum (32) unter Einsatz einer Pumpe (30);
Mischen des Speiseeises (28) und des aromatisierten Konzentrats (24) im Inneren des Misch-Hohlraums (32); sowie
Abgeben eines Gemischs aus dem Speiseeis (28) und dem aromatisierten Konzentrat (24) in einen Behälter (54) über eine Abgabedüse (52);
wobei ein Strömungskanal (76) der Abgabedüse (52) einen ersten Durchmesser an ein Einlass-Ende (72) der Abgabedüse (52) angrenzend und einen zweiten Durchmesser an ein Auslass-Ende (74) der Abgabedüse (52) angrenzend hat und der zweite Durchmesser größer ist als der erste Durchmesser.

7. Verfahren nach Anspruch 6, wobei die Pumpe (30) so betrieben werden kann, dass eine Menge geändert wird, in der das aromatisierte Konzentrat (24) dem Misch-Hohlraum (32) zugeleitet wird, um ein Aussehen des Gemischs aus dem Speiseeis (28) und dem aromatisierten Konzentrat (24) im Inneren des Behälters (54) zu verbessem.

8. Vorrichtung nach Anspruch 7, wobei die Pumpe (30) so betrieben werden kann, dass die Menge, in der das aromatisierte Konzentrat (24) der Mischkammer (30) zugeführt wird, so geändert wird, dass sie einer Menge entspricht, in der das Gemisch aus dem Speiseeis (28) und dem aromatisierten Konzentrat (24) in den Behälter (54) abgegeben wird.

9. Verfahren nach einem der Ansprüche 6 bis 8, das des Weiteren Reduzieren eines Drucks innerhalb einer Leitung (34) zum Zuführen des aromatisierten Konzentrats (24) zu dem Misch-Hohlraum (32) nach Abgeben des Gemischs aus dem Speiseeis (28) und dem aromatisierten Konzentrat (24) in den Behälter (54) umfasst.

10. Verfahren nach Anspruch 9, wobei Reduzieren des Drucks Betreiben der Pumpe (30) in einer umgekehrten Richtung nach Abgeben des Gemischs aus dem Speiseeis (28) und dem aromatisierten Konzentrat (24) in den Behälter (54) einschließt.

11. Verfahren nach einem der Ansprüche 6 bis 10, das des Weiteren Entfernen des aromatisierten Konzentrats (24) von einer oder mehr Oberfläche/n der Mischkammer (32) und/oder der Abgabedüse (52) nach Abgeben des Gemischs aus dem Speiseeis (28) und dem aromatisierten Konzentrat (24) in den Behälter (54) umfasst.

12. Verfahren nach Anspruch 11, wobei Entfernen des aromatisierten Konzentrats (24) von einer oder mehr Oberfläche/n der Mischkammer (32) oder/und der Abgabedüse (52) des Weiteren Öffnen und Schließen der Ventilanordnung (42) nach dem Abgeben umfasst.

13. Verfahren nach Anspruch 6, das des Weiteren umfasst:
Betreiben der Pumpe (30) in umgekehrter Richtung, um Druck innerhalb einer Leitung (34) zu verringern, die das aromatisierte Konzentrat (24) dem Misch-Hohlraum (32) zuführt.

14. Verfahren nach Anspruch 13, wobei Entfernen des aromatisierten Konzentrats (24) von einer oder mehr Oberfläche/n der Mischkammer (32) oder/und der Abgabedüse (52) des Weiteren Öffnen und Schließen der Ventilanordnung (42) nach dem Abgeben umfasst.

## Revendications

1. Appareil (20) de distribution d'un produit sucré congelé comprenant :
une chambre de mélange (32) à l'intérieur de laquelle une crème glacée (28) et au moins un concentré aromatisé (24) sont mélangés,
un ensemble vanne (42) pouvant fonctionner pour réguler un écoulement dudit mélange de ladite crème glacée (28) dans ladite chambre de mélange (32) ;
une pompe (30) pour fournir ledit au moins un concentré aromatisé (24) à ladite chambre de mélange (32) ; et
une buse de distribution (52) disposée en communication fluidique avec ladite chambre de mélange (32), ladite buse de distribution (52) ayant un canal d'écoulement (76) à travers lequel un mélange de ladite crème glacée (28) et dudit au moins un concentré aromatisé (24) est distribué, ledit canal d'écoulement (76) ayant un premier diamètre adjacent à une extrémité d'entrée (72) de ladite buse de distribution (52) et un second diamètre adjacent à une extrémité de sortie (74) de ladite buse de distribution (52), ledit second diamètre étant supérieur audit premier diamètre.

2. Appareil selon la revendication 1, ladite buse de distribution (52) ayant une longueur étendue de sorte que ledit écoulement dudit mélange de ladite crème glacée (28) et dudit au moins un concentré aromatisé (24) à travers ledit canal d'écoulement (76) est laminaire.

3. Appareil selon l'une quelconque des revendications précédentes, ladite pompe (30) pouvant fonctionner pour faire varier une vitesse à laquelle ledit concentré aromatisé (24) est fourni à ladite chambre de mélange (32).

4. Appareil selon l'une quelconque des revendications précédentes, ladite pompe (30) pouvant fonctionner pour faire varier ladite vitesse à laquelle ledit concentré aromatisé (24) est fourni à ladite chambre de mélange (32) pour correspondre à une vitesse à laquelle ledit mélange de la combinaison de ladite crème glacée (28) et dudit au moins un concentré aromatisé (24) est distribué dans un récipient adjacent (54).

5. Appareil selon l'une quelconque des revendications précédentes, ledit appareil comprenant en outre une source (22) dudit concentré aromatisé (24) accouplée fluidiquement à ladite chambre de mélange (32) par l'intermédiaire d'une conduite (34), et ladite pompe (30) pouvant fonctionner dans un sens inverse pour réduire la pression à l'intérieur de ladite conduite (34) .

6. Procédé de distribution d'un produit sucré congelé depuis un appareil comprenant :
l'alimentation de crème glacée (28) à une cavité de mélange (32) par l'intermédiaire d'un ensemble vanne (42) ;
l'alimentation d'un concentré aromatisé (24) à ladite cavité de mélange (32) en utilisant une pompe (30) ;
le mélange de ladite crème glacée (28) et dudit concentré aromatisé (24) à l'intérieur de ladite cavité de mélange (32) ; et
la distribution d'un mélange de ladite crème glacée (28) et dudit concentré aromatisé (24) dans un récipient (54) par l'intermédiaire d'une buse de distribution (52) ;
un canal d'écoulement (76) de ladite buse de distribution (52) ayant un premier diamètre adjacent à une extrémité d'entrée (72) de ladite buse de distribution (52) et ayant un second diamètre adjacent à une extrémité de sortie (74) de ladite buse de distribution (52), ledit second diamètre étant supérieur audit premier diamètre.

7. Procédé selon la revendication 6, ladite pompe (30) pouvant fonctionner pour faire varier une vitesse à laquelle ledit concentré aromatisé (24) est alimenté au niveau de ladite cavité de mélange (32) pour améliorer une apparence dudit mélange de ladite crème glacée (28) et dudit concentré aromatisé (24) à l'intérieur dudit récipient (54).

8. Procédé selon la revendication 7, ladite pompe (30) pouvant fonctionner pour faire varier ladite vitesse à laquelle ledit concentré aromatisé (24) est fourni à ladite chambre de mélange (30) pour correspondre à une vitesse à laquelle ledit mélange de ladite crème glacée (28) et dudit concentré aromatisé (24) est distribué dans ledit récipient (54).

9. Procédé selon l'une quelconque des revendications 6 à 8, comprenant en outre le relâchement d'une pression à l'intérieur d'une conduite (34) pour alimenter ledit concentré aromatisé (24) au niveau de ladite cavité de mélange (32) après que ledit mélange de ladite crème glacée (28) et dudit concentré aromatisé (24) est distribué dans ledit récipient (54).

10. Procédé selon la revendication 9, le relâchement de ladite pression comprenant le fonctionnement de ladite pompe (30) dans un sens inverse après que ledit mélange de ladite crème glacée (28) et dudit concentré aromatisé (24) est distribué dans ledit récipient (54).

11. Procédé selon l'une quelconque des revendications 6 à 10, comprenant en outre l'élimination du concentré aromatisé (24) d'une ou plusieurs surfaces d'au moins l'une de ladite chambre de mélange (32) et de ladite buse de distribution (52) après que ledit mélange de ladite crème glacée (28) et dudit concentré aromatisé (24) est distribué dans ledit récipient (54).

12. Procédé selon la revendication 11, l'élimination du concentré aromatisé (24) d'une ou plusieurs surfaces d'au moins l'une de ladite chambre de mélange (32) et de ladite buse de distribution (52) comprenant en outre l'ouverture et la fermeture dudit ensemble vanne (42) après ladite distribution.

13. Procédé selon la revendication 6, comprenant en outre :
le fonctionnement de ladite pompe (30) à l'inverse pour réduire la pression à l'intérieur d'une conduite (34) fournissant ledit concentré aromatisé (24) au niveau de ladite cavité de mélange (32).

14. Procédé selon la revendication 13, comprenant en outre l'élimination du concentré aromatisé (24) d'une ou plusieurs surfaces d'au moins l'une de ladite chambre de mélange (32) et de ladite buse de distribution (52) comprenant en outre l'ouverture et la fermeture dudit ensemble vanne (42) après ladite distribution.
